# EUROPEAN PATENT SPECIFICATION

(11) **EP 3 581 436 B1**
(45) Date of publication and mention of the grant of the patent: **02.09.2020**
(21) Application number: 18188180.6
(22) Date of filing: 09.08.2018
(51) Int. Cl.: B60R 9/06, B60R 9/10

(54) **EXTENSION MODULE FOR A LOAD CARRIER**
ERWEITERUNGSMODUL FÜR EINEN LASTTRÄGER
MODULE D'EXTENSION POUR SUPPORT DE CHARGE

(30) Priority: 11.06.2018 CN 201810596492
(43) Date of publication of application: 18.12.2019
(73) Proprietor: Carman Enterprise Co., Ltd., Hangzhou 311121 (CN)
(72) Inventor: Wang, Junqiang, Hangzhou, Zhejiang (CN)
(74) Representative: Paul & Albrecht Patentanwälte PartG mbB

(56) References cited:
- DE-U1-202013 005 403
- DE-U1-202017 103 523

## Description

The invention relates to an extension module for a load carrier, in particular a bicycle carrier, which is or can be fastened to a vehicle and comprises at least one profile rail for receiving loads, in particular bicycles, having at least one extension profile rail for receiving loads, in particular a bicycle, and at least one fastening unit for attaching the extension profile rail to the profile rail of the load carrier, the fastening unit having a support element which is connected at its one axial end region to the extension profile rail and at its other axial end region to a mounting device, wherein the fastening unit also has an adapter unit which is or can be connected detachably to the mounting device by means fastening mechanism and is designed to be fixed to the profile rail of the load carrier.

Furthermore, the invention relates to a load carrier, in particular a bicycle carrier, having a coupling device for fastening to a vehicle, in particular a motor vehicle, and a carrier frame connected to this coupling device, on which at least one profile rail for receiving loads, in particular bicycles, is disposed.

Moreover, the invention comprises a method for fastening an extension module to a load carrier, in particular to a bicycle carrier.

Load carriers for fastening to the rear end of a vehicle, in particular a motor vehicle such as a car, are often used for transporting bicycles. Generally, this type of load carrier comprises a coupling device at its front end region which is normally designed so that the load carrier can be fastened to the ball of a conventional trailer coupling. Such load carriers for transporting bicycles comprise a carrier frame to which profile rails for receiving the wheels of bicycles are fastened. These profile rails are normally arranged transversely to the direction of travel and substantially horizontally, and comprise fastening means for fixing the bicycles to the profile rail.

Commercially available load carriers are generally designed so that a defined number of bicycles can be transported on them. It is partially considered to be a disadvantage that the load carriers do not make it possible to carry more than the number of bicycles determined by the construction.

DE 20 2013 005 403 U1 discloses an adapter for fixing a vehicle having three or four tyres on a load carrier for a motor vehicle. Concretely the adapter is used for fastening a vehicle having at least two wheels on the same axle to a bicycle carrier which has two profile rails extending parallel to one another. The adapter comprises an adapter unit which has two fastening devices for each of the two profile rails. Furthermore the adapter includes a girder bridge connecting the two fastening devices, in which two extension profile rails moveable perpendicular to the direction of the profile rails are arranged. The movability of the extension profile rails perpendicular to the direction of the profile rails allows the adapter to adapt to vehicles with different track bits to be attached to it. The adapter disclosed does not allow to transport an additional bike on an existing load carrier.

DE 20 2017 103 523 U1 therefore proposes a bicycle carrier extension system in order to be able to extend the capacity of existing bicycle carriers by one bicycle. Provision is made here to fasten a support element to an existing profile rail of the load carrier, which support element carries an extension profile rail for receiving another bicycle. For fastening to the profile rail, the support element comprises a mounting device with a contour which engages in a groove formed in the outer contour of the profile rail. Furthermore, an engaging element is pivotably disposed on the support element, which engaging element can engage in a groove disposed on the opposite side of the profile rail. For mounting, the support element is clipped in by inserting it into the groove and turning it around the latter so that the engaging element catches in the opposite groove and so fixes the support element with form-fit with the extension profile rail.

It is partially considered to be a disadvantage of this structure that the fastening mechanism is very delicate in form and only one engaging element is provided for fixing the support element to the existing profile rail. If the engaging element is inadvertently touched, the support element may be released, with the consequence that the extension profile rail with the bicycle additionally fastened to it is released from the load carrier. Such an inadvertent movement of the engaging element may also be caused by vibrations, for example when driving over bumps on the road.

Furthermore, the proposed structure leads to the catching mechanism having to be designed to match its cross-sectional profile due to the direct attachment of the support element to the existing profile rail. As a result, an extension system designed in this way can only be fastened to one design of profile rail, and this leads to a large number of versions having to be provided for the various types of profile rail on existing load carriers.

It is therefore the object of the present invention to design an extension module for a load carrier such that the aforementioned disadvantages are avoided and that in particular the fastening of the extension module to the load carrier is designed such that it can also withstand higher mechanical loads.

With an extension module of the type specified at the beginning the object is achieved in that the adapter unit comprises a number of adapter elements which are or can be braced against the profile rail in order to be fixed with force-fit to the latter and to prevent movement of the adapter unit in the longitudinal direction of the profile rail, wherein the adapter elements are screwed or can be screwed to one another in order to be braced against the profile rail or the adapter elements are linked together on one side of the profile rail by a hook engagement and are screwed to one another on an opposing side of the profile rail in order to be braced against the profile rail.

The idea underlying the invention is therefore to attach an adapter unit to the profile rail of the load carrier, which adapter unit may, if so required, also remain on the load carrier in the long term, and to design the mounting device so that it can be connected to the adapter unit. It is thus made possible to design the mounting device to be mechanically robust so that at the same time inadvertent opening, and so detachment of the extension profile rail with the loads fastened to it can be reliably avoided. Furthermore, the adapter unit that is provided enables an identical embodiment of the fastening unit and of the extension profile rail for different types of profile rail disposed on the load carrier because only the adapter unit has to be designed to match the profile rail. Therefore, a large variety of versions for the fastening unit can be avoided.

The adapter unit comprises a number of adapter elements which are or can be braced against, the adapter elements are screwed or can be screwed to one another in order to be braced against the profile rail in order to be fixed with force-fit to the latter and to prevent movement of the adapter unit in the longitudinal direction of the profile rail. For example the adapter elements are screwed or can be screwed to one another in order to be braced against the profile rail. As an alternative the adapter elements can be linked to one another on one side the profile rail by a hook engagement and screwed to one another on an opposing side of the profile rail, in order to be braced against the profile rail.

Preferably, the adapter elements are designed so that they can be placed flat against the outer contour of the profile rail and in particular be engaged with form-fit with the outer contour of the profile rail so as to prevent movement transverse to the profile rail. For example, the adapter unit may have two adapter elements which engage around the profile rail from above and below and are screwed to one another, and so are braced against the profile rail, as a result of which the adapter unit is fixed with force-fit to the profile rail. This screw connection of the two adapter elements constitutes a permanent connection which can only be released with a tool, and so is also advantageous in view of the risk of inadvertent opening of the connection.

Furthermore, the support element can be connected detachably, in particular be screwed, to the extension profile rail. In a preferred embodiment the extension profile rail is formed so as to curve concavely on its upper side, in particular in the shape of a V. In this way the wheels of bicycles can be positioned transversely to the extension profile rail on its upper side.

Furthermore, provision can be made such that at least one, in particular precisely two tensioning devices for fixing a bicycle to the extension profile rail can be assigned to the extension profile rail. The tensioning devices can be held displaceably along the extension profile rail and can comprise a base body with a bearing surface for a bicycle wheel, which base body can be fixed detachably to the extension profile rail.

In one preferred embodiment of the invention the tensioning device has a clamping device for fixing the base body to the extension profile rail. For this purpose the extension profile rail can have a groove which is in particular in the shape of a T, and the clamping device can comprise a clamping screw which can be screwed to a slot nut that can be displaced within the groove in order to fix the tensioning device with force-fit to the extension profile rail. The two wheels of a bicycle are fixed in the longitudinal direction of the extension profile rail by means of the tensioning devices. The tensioning devices which can be displaced along the extension profile rail make it possible here to adapt the extension module flexibly to bicycles of different sizes.

The tensioning device may comprise a tensioning element fastened to the base body for clamping a bicycle wheel. Preferably, the tensioning element is in the form of a tensioning belt for looping round the wheel of a bicycle which is connected, in particular flexibly, to the base body of the tensioning device at its one end region. At its free end region the tensioning belt may have a toothing which can lock into a corresponding catch fastening that is also fastened to the base body of the tensioning device.

Clamping the bicycle wheels prevents inadvertent detachment of the bicycle, in particular jumping out of the concavely curved upper side of the extension profile rail. For fitting, the tensioning belt is placed around the wheel between the spokes of the wheel and in the catch fastening fastened to the base body of the tensioning device at its free end region. A flexible mounting of the tensioning belt is advantageous in view of loading bicycles of different sizes and different wheel dimensions because the angle at which the tensioning belt rests against the wheel of a bicycle can thus be adapted.

In another embodiment of the invention the mounting device has a housing body which is open in particular on its lower side and two bolts arranged on the housing body substantially parallel to the extension profile rail and parallel to one another which lie one behind the other transversely, in particular perpendicular to the extension profile rail, and the adapter unit comprises two recesses assigned to the bolts, with which the two bolts of the mounting device can be engaged in order to attach the fastening unit.

Preferably, the recesses formed in the adapter unit extend parallel to one another and are aligned with one another. The bolts can be displaced relative to one another here between a mounting position and an engaging position in which the bolts are engaged with the contour of the recesses and can be locked.

In one preferred embodiment one of the two bolts is in the form of a stationary bolt connected securely to the housing body, and the other bolt is in the form of a bolt which can be moved between the mounting position and the engaging position. The moveable bolt can be guided here in a slot hole formed in the housing body. In this case locking means are provided for locking the moveable bolt in the engaged position.

The thinking forming the basis of this embodiment is to mount the fastening unit on the adapter unit so that two bolts engage with form-fit in corresponding recesses which are formed in the adapter unit. In the mounting position the bolts that can be displaced with respect to another are introduced into the recesses directed towards one another and are then moved into the engaging position and locked so that the bolts rest against the contour of the recesses directed towards one another and the fastening unit is prevented from becoming detached.

In another embodiment of the invention a tensile force is applied to the moveable bolt by means of an elastic tension element, in particular by means of a helical tension spring, in the direction of the stationary bolt, the tension element in particular being fastened to the stationary bolt. The moveable bolt can be connected to a tension disc which projects out of the housing body on the front side through an opening made in the latter. The tension disc can have a pivot joint in its region projecting out of the housing body, to which pivot joint a locking lever is fastened for locking the moveable bolt in the engaging position.

Furthermore, the locking lever can have two outer faces which are in particular level, one of the two faces of the locking lever in the mounting position and the other of the two faces in the engaging position of the moveable bolt coming to rest flat against the in particular level front face of the housing body. The two faces of the locking lever may preferably be arranged at an angle of 90° to one another and/or a rounding, in particular a circular rounding, may be formed between the faces.

The locking lever can be formed such that the distance between the pivot joint and the face in contact with the housing body in the engaging position is greater than the distance from the face in contact with the housing body in the mounting position.

The locking of the moveable bolt therefore takes place such that in the engaging position, the pivot joint projects further in front of the front face of the housing body than in the mounting position, and the face of the locking lever, which lies further away from the pivot joint, rests against the front face of the housing body. In this way the locking lever holds the moveable bolt against the tensile force in the direction of the stationary bolt in the engaging position. If the moveable bolt is to be brought into the mounting position, the lever is tilted back, the bolt being drawn back into the mounting position by the elastic tension element, and the other outer face of the locking lever coming to rest against the front face of the housing body.

The mounting device may further comprise a covering element for closing the open upper side of the housing body.

The object of the invention is also achieved by a load carrier of the type specified at the start which has an extension module according to the invention which is fastened detachably to the profile rail.

Furthermore, the object of the invention is achieved by a method for fastening an extension module according to the invention to a load carrier, in particular to a bicycle carrier which comprises the following steps:
providing an extension module according to the invention;
fastening the adapter unit to a profile rail formed on the load carrier;
connecting the fastening device and the extension profile rail connected to the latter for receiving loads, in particular a bicycle, to the adapter unit.

With regard to the embodiment of the invention, reference is also made to the sub-claims and to the following description of an exemplary embodiment with reference to the attached drawings. The drawings show as follows:
- Figure 1: a load carrier according to the invention with a fitted extension module in a full isometric view;
- Figure 2: the load carrier according to the invention from Figure 1 in a partial isometric view;
- Figure 3: the load carrier according to the invention from Figure 1 in a partial sectional view comprising a profile rail and an adapter unit;
- Figure 3a: in partial sectional view a profile rail and an adapter unit connected thereto according to an alternative embodiment;

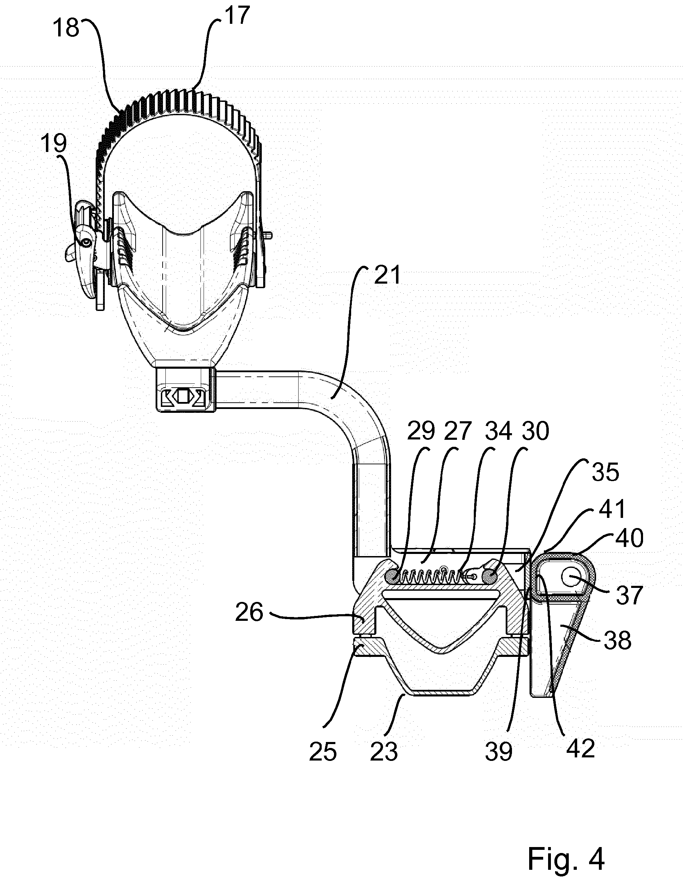

- Figure 4: an extension module according to the invention identical in construction to the extension module illustrated in Figure 1, in a sectional view;

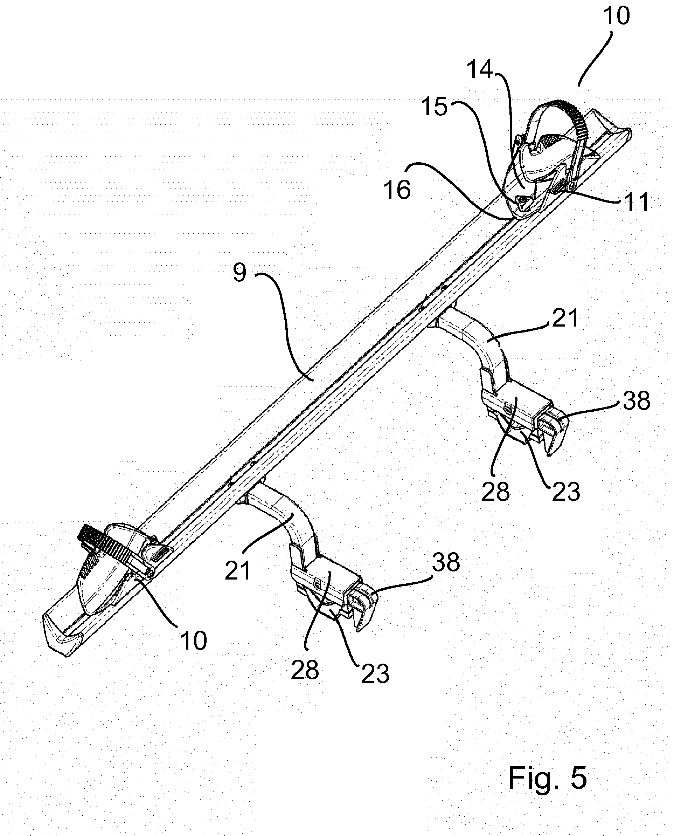

- Figure 5: the extension module according to the invention from Figure 4 in an isometric view;

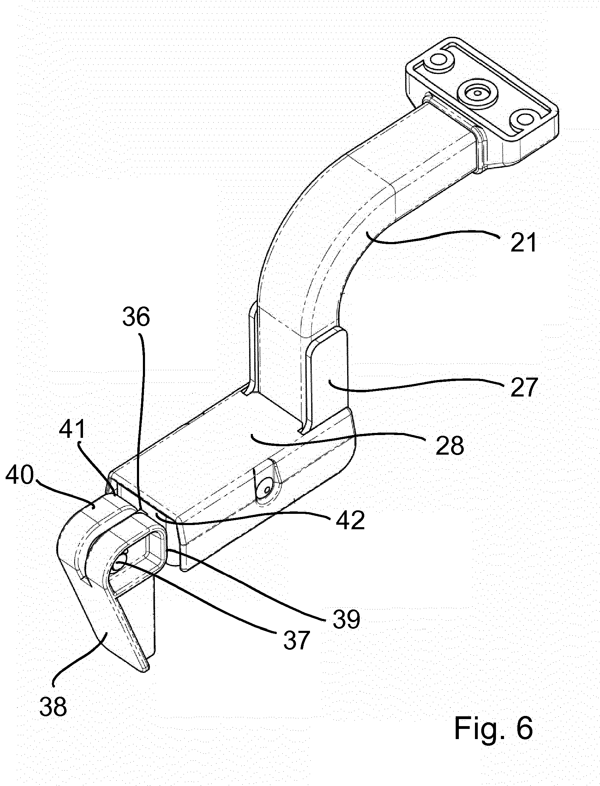

- Figure 6: a fastening unit of the extension module according to the invention from Figure 4 in a partial isometric view;

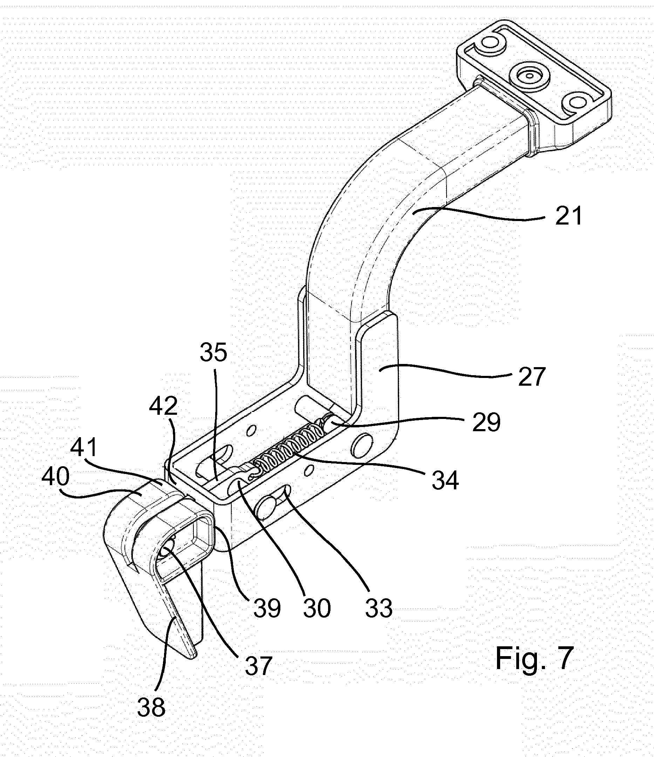

- Figure 7: a fastening unit of the extension module according to the invention from Figure 4 in another partial isometric view.

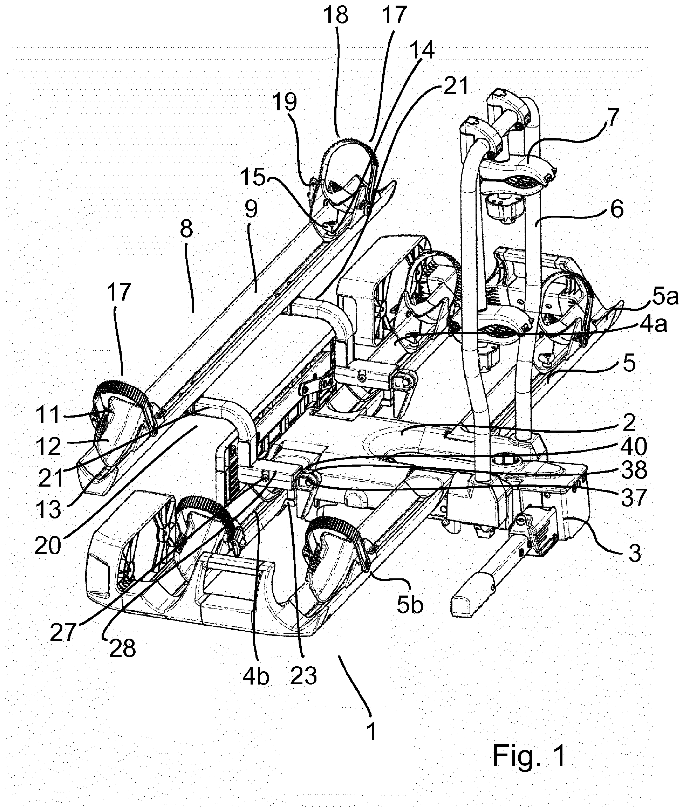

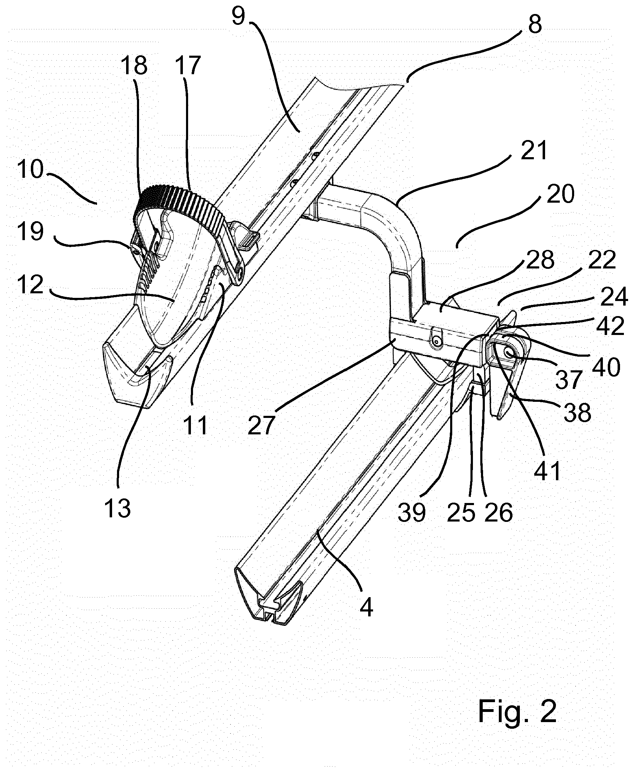

A load carrier 1 according to the present invention in the form of a bicycle carrier is illustrated in Figures 1, 2 and 3.

The load carrier 1 comprises a carrying frame 2 on the front side of which a coupling device 3 is provided for fastening to a vehicle. Two profile rails 4, 5 parallel to one another and extending transversely to the carrying frame 2 are disposed on the carrying frame 2, in which profile rails the wheels of a respective bicycle can be positioned. For this purpose the profile rails 4, 5 are formed so as to curve concavely upwards.

The profile rails 4, 5 are not continuous, but each have two sub-sections 4a, 4b, 5a, 5b which project from the opposing sides of the carrying frame 2 and are formed to each receive a bicycle wheel. Furthermore, the load carrier 1 comprises a fastening frame 6 on which adjustable fastening elements 7 are arranged for the additional fixing of the frame of the bicycles which are not shown.

An extension module 8 for receiving another bicycle is fastened to the bicycle carrier 1. This extension module has an extension profile rail 9 which is formed so as to curve concavely upwards, which is continuous and extends parallel to the profile rails 4, 5. As with each of the two profile rails 4, 5 of the bicycle carrier, precisely two tensioning devices 10 are assigned to the extension profile rail 9 for the fixing of a bicycle to the extension profile rail 9.

The tensioning devices 10 are held displaceably along the extension profile rail 9 or the profile rails 4, 5 and comprise a base body 11 that can be fixed detachably to the extension profile rail 9 or to the profile rails 4, 5 and that has a bearing surface 12 for a bicycle wheel.

Specifically, the extension profile rail 9 and the profile rails 4, 5 each have a T-shaped groove 13. Each tensioning device 10 has a clamping device 14 with a clamping screw 15 which can be screwed to a slot nut 16 that can be displaced in the T-shaped groove 13 in order to fix the base body 11 with force-fit to the extension profile rail 9 or to the profile rails 4, 5.

Each of the tensioning devices 10 further comprises a tensioning element 17 in the form of a tensioning belt fastened to the base body 11 for clamping a bicycle wheel. In its one end region the tensioning element 17 is connected flexibly to the base body 11 of the tensioning device 10, and is designed to loop around a bicycle wheel. In its free end region the tensioning element 17 has a toothing 18 which can catch in a corresponding catch fastening 19 fastened to the base body 11 of the tensioning device 10.

The extension module 8 further comprises two fastening units 20 for attaching the extension profile rail 9 to the profile rail 4 of the load carrier 1.

Each of the two fastening units 20 has a support element 21 which is screwed to the extension profile rail 9 in its one axial end region and is connected to a mounting device 22 in its other axial end region.

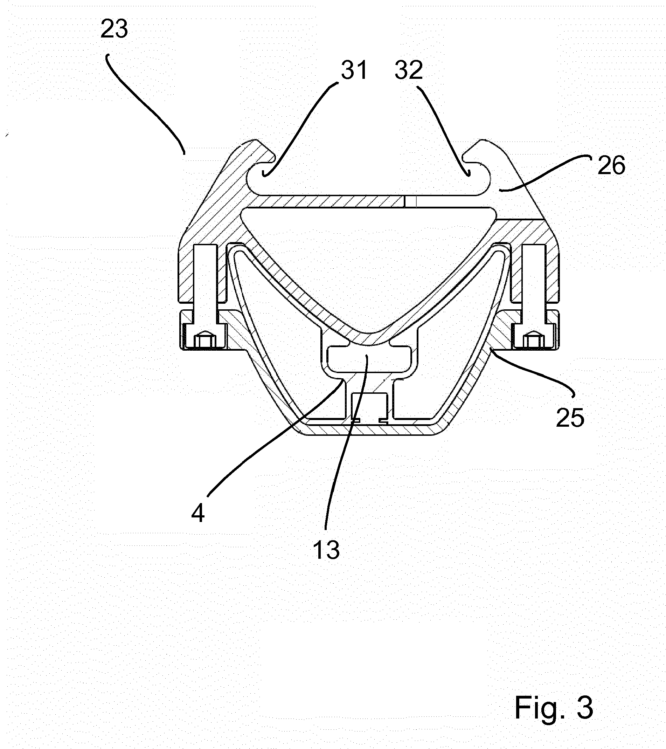

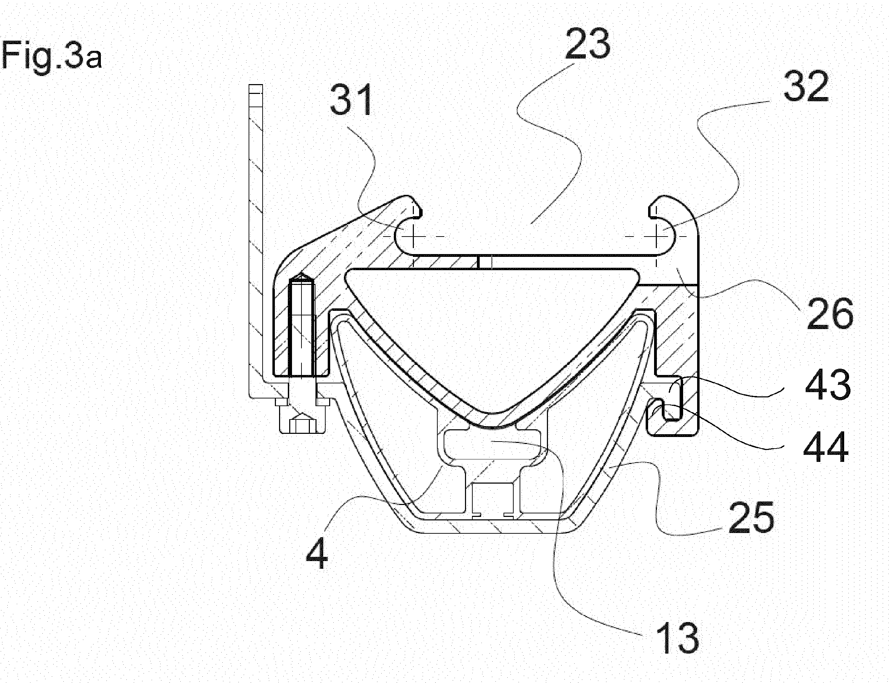

Corresponding adapter units 23, which are fastened detachably to the profile rail 4, are assigned to the mounting devices 22. Specifically, the fastening units 20 each have an adapter unit 23 fixed to the profile rail 4 of the load carrier 1. Each adapter unit 23 has two adapter elements 25, 26 which engage around the profile rail 4 from above and below and which are formed such that they engage with form-fit with the outer contour of the profile rail 4. The adapter units 23 are fixed to the rear profile rail 4 of the load carrier 1 by the adapter elements 25, 26 being screwed to one another against the profile rail 4, and so are fixed to the latter with force-fit, and movement of the adapter units 23 in the longitudinal direction of the profile rail 4 is prevented. Specifically the adapter elements 25, 26 are screwed to one another on opposing sides of the profile rail 4 (see Figure 3).

As shown in Figure 3a the adapter elements 25, 26 may also be connected in a different way in order to be clamped against the profile rail 4. In this embodiment the adapter elements 25, 26 are linked to one another on one side of the profile rail 4 by a hook engagement. For this purpose hooks 43, 44 are formed on the two adapter elements 25, 26 which are engaged with one another in such a way, that at this connection point the upper adapter element 26 cannot be lifted from the lower adapter element 25. As an alternative a slit or cutout could be formed in the lower adapter element 25, into which the hook 44 of the upper adapter element 26 extends.

On side of the profile rail opposite side to the hook engagement location the two adapter elements 25, 26 are screwed together in order to brace the adapter element 25, 26 against the profile rail 4.

In order to fix the mounting device 22 to the adapter unit 23 the mounting devices 22 each have a frame-like housing body 27, the open upper side of which is closed by a covering element 28. Held against the housing body 27 are two bolts 29, 30 arranged parallel to the extension profile rail 9 and parallel to one another and which lie one behind the other perpendicular to the extension profile rail 9 and pass through the housing body 27.

One of the two bolts is in the form of a stationary bolt 29 connected securely to the housing body 27, and the other bolt is in the form of a moveable bot 30 which is guided moveably between a mounting position lying closer to the stationary bolt 29 and an engaging position in slot holes 33 of the housing body 27 lying further away from the stationary bolt 29 and that can be locked in the engaged position.

The adapter units 23 each comprise two recesses 31, 32 assigned to the bolts 29, 30, extending parallel to one another and aligned with one another, with which the two bolts 29, 30 of the mounting device 22 can be engaged. In the engaging position the bolts 29, 30 lie on the outside against the contour of the recesses 31, 32.

A tensile force is applied to the moveable bolt 30 in the direction of the stationary bolt 29 by means of a helical tension spring 34 which is fastened to the stationary bolt 29. The moveable bolt 30 is connected to a tension disc 35 which projects out of the housing body 27 on the front side through an opening 36 made in the latter. In its region projecting out of the housing body 27 the tension disc 35 has a pivot joint 37 to which a locking lever 38 is fastened for locking the moveable bolt 30 in the engaging position.

The locking lever 38 has two adjacent level outer faces 39, 40 which are arranged at an angle of 90° to one another and between which a circular rounding 41 is formed. One of the two faces 40 of the locking lever 38 comes to rest flat against the level front face 42 of the housing body 27 in the mounting position, and the other of the two faces 39 in the engaging position of the moveable bolt 30. The distance between the pivot joint 37 and the face 39 in contact with the housing body 27 in the engaging position is greater than the distance from the face 40 in contact with the housing body 27 in the mounting position.

An extension module 8 according to the invention is fastened to a load carrier 1 by the adapter units 23 first of all being fastened to the profile rail 4 formed on the load carrier 1 before, next, the fastening units 20 and the extension profile rail 9 connected to the latter are connected to the adapter units 23 in order to receive a bicycle.

### List of reference numbers

- 1: load carrier
- 2: carrying frame
- 3: coupling device
- 4, 5: profile rail
- 4a, 4b, 5a, 5b: sub-section of the profile rails
- 6: fastening frame
- 7: fastening element
- 8: extension module
- 9: extension profile rail
- 10: tensioning device
- 11: base body
- 12: bearing surface
- 13: groove
- 14: clamping device
- 15: clamping screw
- 16: slot nut
- 17: tensioning element
- 18: toothing
- 19: catch fastening
- 20: fastening unit
- 21: support element
- 22: mounting device
- 23: adapter unit
- 24: fastening mechanism
- 25, 26: adapter element
- 27: housing body
- 28: covering element
- 29: stationary bolt
- 30: moveable bolt
- 31,32: recess
- 33: slot hole
- 34: helical tension spring
- 35: tension disc
- 36: front-side opening
- 37: pivot joint
- 38: locking lever
- 39: outer face of the locking lever
- 40: outer face of the locking lever
- 41: rounding
- 42: front face of the housing body
- 43: hook
- 44: hook

## Claims

1. An extension module (8) for a load carrier (1), in particular a bicycle carrier, which is or can be fastened to a vehicle and comprises at least one profile rail (4, 5) for receiving loads, in particular bicycles, having
at least one extension profile rail (9) for receiving loads, in particular a bicycle, and at least one fastening unit (20) for attaching the extension profile rail (9) to the profile rail (4) of the load carrier (1), the fastening unit (20)
having a support element (21) which is connected at its one axial end region to the extension profile rail (9) and at its other axial end region to a mounting device (22),
wherein the fastening unit (20) also has an adapter unit (23) which is or can be connected detachably to the mounting device (22) by means of a fastening mechanism (24) and is designed to be fixed to the profile rail (4) of the load carrier (1), **characterised in that** the adapter unit (23) comprises a number of adapter elements (25, 26) which are or can be braced against the profile rail (4) in order to be fixed with force-fit to the latter and to prevent movement of the adapter unit (23) in the longitudinal direction of the profile rail (4), wherein the adapter elements (25, 26) are screwed or can be screwed to one another in order to be braced against the profile rail (4) or the adapter elements (25, 26) are linked together on one side of the profile rail (4) by a hook engagement and are screwed to one another on an opposing side of the profile rail (4) in order to be braced against the profile rail (4).

2. The extension module (8) according to claim 1, **characterised in that** the adapter elements (25, 26) are designed so that they can be placed flat against the outer contour of the profile rail (4) and preferably can be engaged with form-fit with the outer contour of the profile rail (4) so as to prevent movement transverse to the profile rail (4).

3. The extension module (8) according to any of the preceding claims, **characterised in that** the support element (21) is connected detachably, in particular is screwed, to the extension profile rail (9), and/or that the extension profile rail (9) is formed so as to curve concavely on its upper side, in particular in the shape of a V.

4. The extension module (8) according to any of the preceding claims, **characterised in that** at least one, in particular precisely two tensioning devices (10) for fixing a bicycle to the extension profile rail (9) are assigned to the extension profile rail (9),
wherein in particular the at least one tensioning device (10) is held displaceable along the extension profile rail (9) and comprises a base body (11) with a bearing surface (12) for a bicycle wheel, which base body (11) can be fixed detachably to the extension profile rail (9).

5. The extension module (8) according to claim 4, wherein the tensioning device (10) is held displaceable along the extension profile rail (9) and comprises a base body (11) with a bearing surface (12) for a bicycle wheel, which base body (11) can be fixed detachably to the extension profile rail (9), **characterised in that** the tensioning device (10) has a clamping device (14) for fixing the base body (11) to the extension profile rail (9), wherein, in particular, the extension profile rail (9) has a groove (13) which is preferably in the shape of a T and the clamping device (14) comprises a clamping screw (15) which can be screwed to a slot nut (16) that can be displaced within the groove (13) in order to fix the tensioning device (10) with force-fit to the extension profile rail (9).

6. The extension module (8) according to claim 5, **characterised in that** the tensioning device (10) comprises a tensioning element (17) fastened to the base body (11) for clamping a bicycle wheel, wherein, in particular, the tensioning element (17) is in the form of a tensioning belt for looping round the wheel of a bicycle which is connected, preferably flexibly, to the base body (11) of the tensioning device (10) at its one end region, and preferably has a toothing (18) at its free end region which can lock into a corresponding catch fastening (19) that is also fastened to the base body (11) of the tensioning device (10).

7. The extension module (8) according to any of the preceding claims, **characterised in that** the mounting device (22) has a housing body (27) which is open on its lower side and two bolts (29, 30) arranged on the housing body (27) substantially parallel to the extension profile rail (9) and parallel to one another which lie one behind the other transversely, in particular perpendicular to the extension profile rail (9), and the adapter unit (23) comprises two recesses (31, 32) assigned to the bolts (29, 30), with which the two bolts (29, 30) of the mounting device (22) can be engaged in order to attach the fastening unit (20).

8. The extension module (8) according to claim 7, **characterised in that** the recesses (31, 32) formed in the adapter unit (23) extend parallel to one another and are aligned with one another.

9. The extension module (8) according to claim 7 or 8, **characterised in that** the bolts (29, 30) can be displaced relative to one another between a mounting position and an engaging position in which the bolts (29, 30) are engaged with the contour of the recesses (31, 32) and can be locked, wherein in particular one of the two bolts (29) is in the form of a stationary bolt (29) connected securely to the housing (27) body, and the other bolt (30) is in the form of a bolt (30) which can be moved between the mounting position and the engaging position, wherein preferably the moveable bolt (30) is guided in a slot hole (33) of the housing body (27) and locking means are provided for locking the moveable bolt (30) in the engaging position.

10. The extension module (8) according to claim 9, wherein one of the two bolts (29) is in the form of a stationary bolt (29) connected securely to the housing (27) body, and the other bolt (30) is in the form of a bolt (30) which can be moved between the mounting position and the engaging position, wherein preferably the moveable bolt (30) is guided in a slot hole (33) of the housing body (27) and locking means are provided for locking the moveable bolt (30) in the engaging position, **characterised in that** a tensile force is applied to the moveable bolt (30) by means of an elastic tension element, in particular by means of a helical tension spring (34), in the direction of the stationary bolt (29), the tension element in particular being fastened to the stationary bolt.

11. The extension module (8) according to claim 10, **characterised in that** the moveable bolt (30) is connected to a tension disc (35) which projects out of the housing body (27) on the front side through an opening (36) made in the latter.

12. The extension module (8) according to claim 11, **characterised in that** the tension disc (35) has a pivot joint (37) in its region projecting out of the housing body (27), to which pivot joint (37) a locking lever (38) is fastened for locking the moveable bolt (30) in the engaging position.

13. The extension module (8) according to claim 12, **characterised in that** the locking lever (38) has two outer faces (39, 40) which are in particular level, one of the two faces (40) of the locking lever in the mounting position and the other of the two faces (39) in the engaging position of the moveable bolt (30) coming to rest flat against the in particular level front face (42) of the housing body (27), wherein, in particular, the two faces (39, 40) of the locking lever (38) are arranged at an angle of 90° to one another and/or a rounding (41), in particular a circular rounding, is formed between the two faces (39, 40), wherein, preferably, the locking lever (38) is formed such that the distance between the pivot joint (37) and the face (39) in contact with the housing body (27) in the engaging position is greater than the distance from the face (40) in contact with the housing body (27) in the mouting position.

14. A load carrier (1), in particular a bicycle carrier, having a carrying frame (2) and a coupling device (3) connected to the latter for fastening to a vehicle, in particular a motor vehicle, on which at least one profile rail (4) for receiving loads, in particular bicycles, is disposed, the load carrier having an extension module (8) according to any of Claims 1 to 13, which is fastened detachably to the profile rail.

15. A method for fastening an extension module (8) according to any of Claims 1 to 13 to a load carrier (1), in particular to a bicycle carrier, comprising the following steps:
providing an extension module (8) according to any of Claims 1 to 13;
fastening the adapter unit (23) to a profile rail (4) formed on the load carrier (1);
connecting the fastening unit (20) and the extension profile rail (8) connected to the latter for receiving loads, in particular a bicycle, to the adapter unit (23).

## Patentansprüche

1. Ein Erweiterungsmodul (8) für einen Lastenträger (1), insbesondere einen Fahrradträger, der an einem Fahrzeug befestigt oder befestigbar ist und mindesten eine Profilschiene (4, 5) zur Aufnahme von Lasten, insbesondere Fahrrädern, aufweist, mit
mindestens einer Erweiterungs-Profilschiene (9) zur Aufnahme von Lasten, insbesondere eines Fahrrads, und zumindest einer Befestigungseinheit (20) zum Anbringen der Erweiterungs-Profilschiene (9) an der Profilschiene (4) des Lastträgers (1), wobei die Befestigungseinheit (20)
ein Stützelement (21) aufweist, das an einem seiner axialen Endbereiche mit der Erweiterungs-Profilschiene (9) und an seinem anderen axialen Endbereich mit einer Montagevorrichtung (22) verbunden ist,
wobei die Befestigungseinheit (20) ferner eine Adaptereinheit (23) aufweist, welche mittels eines Befestigungsmechanismus (24) lösbar mit der Montagevorrichtung (22) verbunden oder verbindbar ist und zur Befestigung an der Profilschiene (4) des Lastträgers (1) ausgebildet ist,
**dadurch gekennzeichnet,**
**dass** die Adaptereinheit (23) eine Anzahl von Adapterelementen (25, 26) aufweist, die mit der Profilschiene (4) verspannt oder verspannbar sind, um kraftschlüssig an dieser befestigt zu werden und um eine Bewegung der Adaptereinheit (23) in der Längsrichtung der Profilschiene (4) zu verhindern, wobei die Adapterelemente (25, 26) miteinander verschraubt oder verschraubbar sind, um mit der Profilschiene (4) verspannt zu werden, oder die Adapterelemente (25, 26) an einer Seite der Profilschiene (4) über einen Hakeneingriff miteinander verbunden sind und miteinander an einer gegenüber liegenden Seite der Profilschiene (4) verschraubt sind, um mit der Profilschiene (4) verspannt zu werden.

2. Das Erweiterungsmodul (8) nach Anspruch 1, **dadurch gekennzeichnet, dass** die Adapterelemente (25, 26) so ausgebildet sind, dass sie flach an die Außenkontur der Profilschiene (4) in Anlage bringbar sind und vorzugsweise formschlüssig mit der Außenkontur der Profilschiene (4) in Eingriff gebracht werden können, um eine Bewegung quer zu der Profilschiene (4) zu verhindern.

3. Das Erweiterungsmodul (8) nach einem der vorhergehenden Ansprüche, **dadurch gekennzeichnet, dass** das Stützelement (21) mit der Erweiterungs-Profilschiene (9) lösbar verbunden, insbesondere verschraubt ist, und/oder dass die Erweiterungs-Profilschiene (9) zu ihrer Oberseite hin konkav gebogen, insbesondere V-förmig ausgebildet ist.

4. Das Erweiterungsmodul (8) nach einem der vorhergehenden Ansprüche, **dadurch gekennzeichnet, dass** der Erweiterungs-Profilschiene (9) zumindest eine, insbesondere genau zwei Spannvorrichtungen (10) zur Befestigung eines Fahrrads an der Erweiterungs-Profilschiene (9) zugeordnet sind,
wobei insbesondere die zumindest eine Spannvorrichtung (10) entlang der Erweiterungs-Profilschiene (9) verschiebbar gehalten ist und einen Grundkörper (11) mit einer Auflagefläche (12) für ein Fahrrad aufweist, wobei der Grundkörper (11) lösbar an der Erweiterungs-Profilschiene (9) befestigbar ist.

5. Das Erweiterungsmodul (8) nach Anspruch 4, wobei die Spannvorrichtung (10) entlang der Erweiterungs-Profilschiene (9) verschiebbar gehalten ist und einen Grundkörper (11) mit einer Auflagefläche (12) für ein Fahrrad aufweist, wobei der Grundkörper (11) lösbar an der Erweiterungs-Profilschiene (9) befestigbar ist, **dadurch gekennzeichnet, dass** die Spannvorrichtung (10) eine Klemmvorrichtung (14) zur Befestigung des Grundkörpers (11) an der Erweiterungs-Profilschiene umfasst, wobei, insbesondere, die Erweiterungs-Profilschiene (9) eine Nut (13), die insbesondere T-förmig ausgebildet ist, umfasst und die Klemmvorrichtung (14) eine Klemmschraube (15) aufweist, die mit einem Nutenstein (16) verschraubbar ist, der innerhalb der Nut (13) verschiebbar ist, um die Spannvorrichtung (10) kraftschlüssig an der Erweiterungs-Profilschiene (9) zu fixieren.

6. Das Erweiterungsmodul (8) nach Anspruch 5, **dadurch gekennzeichnet, dass** die Spannvorrichtung (10) ein am Grundkörper (11) befestigtes Spannelement (17) zum Verspannen eines Fahrradrades aufweist, wobei das Spannelement (17) insbesondere in Form eines Spanngurtes zum Umschlingen des Rades eines Fahrrads ausgebildet ist, welcher an seiner einen Endregion vorzugsweise flexibel mit dem Grundkörper (11) der Spannvorrichtung (10) verbunden ist und vorzugsweise eine Verzahnung an seinem freien Endabschnitt aufweist, welche in einen korrespondierenden Rastverschluss (19), der ebenfalls an dem Grundkörper (11) der Spannvorrichtung (10) befestigt ist, verriegelt werden kann.

7. Das Erweiterungsmodul (8) nach einem der vorhergehenden Ansprüche, **dadurch gekennzeichnet, dass** die Montagevorrichtung (22) einen an seiner Unterseite offenen Gehäusekörper (27) und zwei an dem Gehäusekörper (27) angebrachte Bolzen (29, 30), welche im Wesentlichen parallel zu der Erweiterungs-Profilschiene (9) und parallel zueinander angeordnet sind und quer, insbesondere senkrecht, zu der Erweiterungs-Profilschiene (9) hintereinander positioniert sind, und dass die Adaptereinheit (23) zwei Ausnehmungen (31, 32), die den Bolzen (29, 30) zugeordnet sind, aufweist, mit welchen die beiden Bolzen (29, 30) der Montagevorrichtung (22) miteinander in Eingriff gebracht werden können, um die Befestigungseinheit (20) anzubringen.

8. Das Erweiterungsmodul (8) nach Anspruch 7, **dadurch gekennzeichnet, dass** die innerhalb des Adapterelements (23) ausgebildeten Ausnehmungen (31, 32) parallel zueinander verlaufen und zueinander ausgerichtet sind.

9. Das Erweiterungsmodul (8) nach Anspruch 7 oder 8, **dadurch gekennzeichnet, dass** die Bolzen (29, 30) relativ zueinander zwischen einer Montagestellung und einer Eingriffsstellung, in welcher die Bolzen (29, 30) mit der Kontur der Ausnehmungen (31, 32) in Eingriff stehen und verriegelbar sind, verschiebbar sind, wobei insbesondere einer der beiden Bolzen (29) als feststehender Bolzen (29) ausgebildet ist, der fest mit dem Gehäusekörper verbunden ist, und der andere Bolzen (30) als ein Bolzen, welcher zwischen der Montagestellung und der Eingriffsstellung bewegbar ist, ausgebildet ist, wobei der bewegbare Bolzen (30) vorzugsweise durch ein Langloch (33) des Gehäusekörpers (27) geführt ist und Verriegelungsmittel zum Verriegeln des bewegbaren Bolzens (30) in der Eingriffsposition vorgesehen sind.

10. Das Erweiterungsmodul (8) nach Anspruch 9, wobei einer der beiden Bolzen (29) als feststehender Bolzen (29) ausgebildet ist, der fest mit dem Gehäusekörper verbunden ist, und der andere Bolzen (30) als ein Bolzen, welcher zwischen der Montagestellung und der Eingriffsstellung bewegbar ist, ausgebildet ist, wobei der bewegbare Bolzen (30) vorzugsweise durch ein Langloch (33) des Gehäusekörpers (27) geführt ist und Verriegelungsmittel zum Verriegeln des bewegbaren Bolzens (30) in der Eingriffsposition vorgesehen sind, **dadurch gekennzeichnet, dass** auf den beweglichen Bolzen (30) mittels eines elastischen Zugelements, insbesondere mittels einer Schraubenzugfeder (34), eine Zugkraft in Richtung des feststehenden Bolzens (29) aufgebracht wird, wobei das Zugelement insbesondere an dem feststehenden Bolzen befestigt ist.

11. Das Erweiterungsmodul (8) nach Anspruch 10, **dadurch gekennzeichnet, dass** der bewegbare Bolzen (30) mit einer Spannscheibe (35) verbunden ist, welche durch eine in den Gehäusekörper (27) ausgebildete Öffnung (36) stirnseitig aus diesem herausragt.

12. Das Erweiterungsmodul (8) nach Anspruch 11, **dadurch gekennzeichnet, dass** die Spannscheibe (35) in ihrem aus dem Gehäusekörper (27) herausragenden Bereich ein Schwenkgelenk (37) aufweist, wobei an dem Schwenkgelenk (37) ein Verriegelungshebel (38) befestigt ist, um den bewegbaren Bolzen (30) in der Eingriffsposition zu verriegeln.

13. Das Erweiterungsmodul (8) nach Anspruch 12, **dadurch gekennzeichnet, dass** der Verriegelungshebel (38) zwei insbesondere ebene Außenflächen (39, 40) aufweist, wobei eine der beiden Flächen (40) des Verriegelungshebels in der Montagestellung und die andere der beiden Flächen (39) in der Eingriffsstellung des bewegbaren Bolzens (30) flächig an der insbesondere ebenen Stirnfläche (42) des Gehäusekörpers (27) zur Anlage kommt, wobei, insbesondere, die beiden Flächen (39, 40) des Verriegelungshebels (38) zueinander in einem Winkel von 90° angeordnet sind und/oder zwischen den beiden Flächen (39, 40) eine insbesondere kreisförmige Rundung gebildet ist, wobei der Verriegelungshebel (38) vorzugsweise derartig ausgebildet ist, dass der Abstand zwischen dem Schwenkgelenk (37) und der in der Eingriffsstellung am Gehäusekörper (27) anliegenden Fläche (39) größer ist als der Abstand zu der in der Montagestellung an dem Gehäusekörper (27) anliegenden Fläche (40).

14. Ein Lastenträger (1), insbesondere ein Fahrradträger, mit einem Tragrahmen (2) und einer mit diesem zur Befestigung an einem Fahrzeug, insbesondere einem Kraftfahrzeug, verbundenen Kupplungseinrichtung (3), auf welchem zumindest eine Profilschiene (4) zur Aufnahme von Lasten, insbesondere Fahrrädern, angeordnet ist, wobei der Lastträger ein Erweiterungsmodul (8) nach einem der Ansprüche 1 bis 13 aufweist, welches lösbar an der Profilschiene befestigt ist.

15. Verfahren zur Befestigung eines Erweiterungsmoduls (8) nach einem der Ansprüche 1 bis 13 an einem Lastenträger (1), insbesondere an einem Fahrradträger, aufweisend folgende Schritte:
Bereitstellen eines Erweiterungsmoduls (8) nach einem der Ansprüche 1 bis 13;
Befestigen der Adaptereinheit (23) an einer an dem Lastenträger (1) ausgebildeten Profilschiene (4);
Verbinden der Befestigungseinheit und der mit dieser verbundenen Erweiterungs-Profilschiene (9) zur Aufnahme von Lasten, insbesondere eines Fahrrads, mit der Adaptereinheit (23).

## Revendications

1. Un module d'extension (8) pour un porte-charge (1), en particulier pour un porte-bicyclette, qui est ou peut être fixé en un véhicule et qui comprend au moins un rail profilé (4, 5) pour recevoir des charges, en particulier des bicyclettes, avec
au moins un rail profilé d'extension (9) pour recevoir des charges, en particulier une bicyclette, et au moins une unité de fixation (20) pour fixer le rail profilé d'extension (9) sur le rail profilé (4) du porte-charge (1), l'unité de fixation (20)
ayant un élément de support (21) qui est relié à l'une de ses extrémités axiales au rail profilé d'extension (9) et à son autre extrémité axiale à un dispositif de montage (22),
l'unité de fixation (20) présentant en outre une unité d'adaptation (23) qui est ou peut être reliée de manière amovible au dispositif de montage (22) au moyen d'un mécanisme de fixation (24) et qui est formée pour être fixée sur le rail profilé (4) du porte-charge (1), **caractérisé en ce que** l'unité d'adaptation (23) comprend plusieurs éléments d'adaptation (25, 26) qui sont ou peuvent être serrés contre le rail profilé (4) pour être fixés par force sur celui-ci et pour empêcher un déplacement de l'unité d'adaptation (23) dans la direction longitudinale du rail profilé (4), les éléments d'adaptation (25, 26) étant vissés ou pouvant être vissés les uns aux autres afin de s'appuyer serrés contre le rail profilé (4) ou les éléments d'adaptation (25, 26) étant reliés entre eux sur un côté du rail profilé (4) par un engagement à crochet et étant vissés les uns aux autres sur un côté opposé du rail profilé (4) afin de s'appuyer serrés contre le rail profilé (4).

2. Le module d'extension (8) selon la revendication 1, **caractérisé en ce que** les éléments d'adaptation (25, 26) sont conçus de manière a pouvoir être placés à plat contre le contour extérieur du rail profilé (4) et à pouvoir de préférence être engagés par complémentarité de forme avec le contour extérieur du rail profilé (4) afin d'empêcher tout mouvement transversal au rail profilé (4).

3. Le module d'extension (8) selon l'une des revendications précédentes, **caractérisé en ce que** l'élément de support (21) est relié de manière amovible, en particulier est vissé, au rail profilé d'extension (9), et/ou que le rail profilé d'extension (9) est formé de manière à se courber de manière concave sur son côté supérieure, en particulier en forme de V.

4. Le module d'extension (8) selon l'une des revendications précédentes, **caractérisé en ce qu'**au moins un, en particulier exactement deux dispositifs de tension (10) pour la fixation d'une bicyclette sur le rail profilé d'extension (9) sont associés au rail profilé d'extension (9),
le au moins un dispositif de tension (10) étant en particulier maintenu de manière déplaçable le long du rail profilé d'extension (9) et comprenant en particulier un corps de base (11) avec une surface d'appui (12) pour une roue de bicyclette, lequel corps de base (11) peut être fixé de manière amovible sur le rail profilé d'extension (9).

5. Le module d'extension (8) selon la revendication 4, le dispositif de tension (10) étant maintenu de manière déplaçable le long du rail profilé d'extension (9) et comprenant un corps de base (11) avec une surface d'appui (12) pour une roue de bicyclette, lequel corps de base (11) peut être fixé de manière amovible sur le rail profilé d'extension (9), **caractérisé en ce que** le dispositif de tension (10) présente un dispositif de serrage (14) pour la fixation du corps de base (11) sur le rail profilé d'extension (9), le rail profilé d'extension (9) en particulier présentant une rainure (13) qui est de préférence en forme de T et le dispositif de serrage (14) en particulier comprenant une vis de serrage (15) qui peut être vissée à un écrou à fente (16) pouvant être déplacé dans la rainure (13) afin de fixer le dispositif de serrage (10) par force sur le rail profilé d'extension (9).

6. Le module d'extension (8) selon la revendication 5, **caractérisé en ce que** le dispositif de tension (10) comprend un élément de tension (17) fixé sur le corps de base (11) pour le serrage une roue de bicyclette, l'élément de tension (17) étant, en particulier, réalisé sous la forme d'une courroie de tension destiné à s'enrouler autour de la roue d'une bicyclette, étant reliée, de préférence de manière flexible, sur le corps de base (11) du dispositif de tension (10) à l'une de ses zones d'extrémité, et présentant de préférence une denture (18) à sa zone d'extrémité libre, qui peut s'enclencher dans une fixation d'arrêt correspondante (19) également fixée sur le corps de base (11) du dispositif de tension (10).

7. Le module d'extension (8) selon l'une des revendications précédentes, **caractérisé en ce que** le dispositif de montage (22) présente un corps de boîtier (27) ouvert sur son côté inférieur et deux boulons (29, 30) disposés sur le corps de boîtier (27) sensiblement parallèlement au rail profilé d'extension (9) et parallèlement l'un à l'autre, qui se trouvent l'un derrière l'autre transversalement, en particulier perpendiculairement au rail profilé d'extension (9), et l'unité d'adaptation (23) comprend deux évidements (31, 32) associés aux boulons (29, 30), avec lesquels les deux boulons (29, 30) du dispositif de fixation (22) peuvent être engagés afin de fixer l'unité de fixation (20).

8. Module d'extension (8) selon la revendication 7, **caractérisé en ce que** les évidements (31, 32) formés dans l'unité d'adaptation (23) s'étendent parallèlement les uns aux autres et sont alignés les uns par rapport aux autres.

9. Le module d'extension (8) selon la revendication 7 ou 8, **caractérisé en ce que** les boulons (29, 30) peuvent être déplacés l'un par rapport à l'autre entre une position de montage et une position d'engagement dans laquelle les boulons (29, 30) sont en engagement avec le contour des évidements (31, 32) et peuvent être verrouillés, l'un des deux boulons (29) en particulier étant réalisé sous la forme d'un boulon fixe (29) solidement relié de manière fixe au corps du boîtier (27), et l'autre boulon (30) étant sous la forme d'un boulon (30) qui peut être déplacé entre la position de montage et la position d'engagement, le boulon mobile (30) de préférence étant guidé dans un trou oblong (33) du corps du boîtier (27) et des moyens de verrouillage étant prévus pour verrouiller le boulon mobile (30) dans la position d'engagement.

10. Le module d'extension (8) selon la revendication 9, l'un des deux boulons (29) étant réalisé sous la forme d'un boulon fixe (29) solidement relié de manière fixe au corps du boîtier (27), et l'autre boulon (30) étant sous la forme d'un boulon (30) qui peut être déplacé entre la position de montage et la position d'engagement, le boulon mobile (30) de préférence étant guidé dans un trou oblong (33) du corps du boîtier (27) et des moyens de verrouillage étant prévus pour verrouiller le boulon mobile (30) dans la position d'engagement, **caractérisé en ce qu'**une force de traction est appliquée au boulon mobile (30) au moyen d'un élément de traction élastique, en particulier au moyen d'un ressort de pression en spiral (34), en direction du boulon fixe (29), l'élément de traction étant en particulier fixé au boulon fixe.

11. Le module d'extension (8) selon la revendication 10, **caractérisé en ce que** le boulon mobile (30) est relié à un disque de tension (35) qui dépasse du corps de boîtier (27) sur le côté frontal à travers une ouverture (36) pratiquée dans ce dernier.

12. Le module d'extension (8) selon la revendication 11, **caractérisé en ce que** le disque de tension (35) présente, dans sa zone dépassant du corps de boîtier (27), une articulation pivotante (37) à laquelle est fixé un levier de blocage (38) pour bloquer le boulon mobile (30) en position d'engagement.

13. Le module d'extension (8) selon la revendication 12, **caractérisé en ce que** le levier de blocage (38) présente deux surfaces extérieures (39, 40) qui sont particulièrement planes, l'une des deux surfaces (40) du levier de blocage en position de montage et l'autre des deux surfaces (39) en position d'engagement boulon mobile (30) venant s'appliquer à plat contre la surface frontale (42) particulièrement plane du corps de boîtier (27), les deux surfaces (39, 40) du levier de blocage (38) en particulier étant disposées sous un angle de 90° l'une par rapport à l'autre et/ou un arrondi (41), en particulier un arrondi circulaire, est formé entre les deux surfaces (39, 40), le levier de blocage (38) étant de préférence conçu de telle sorte que la distance entre l'articulation pivotante (37) et la surface (39) en contact avec le corps du boîtier (27) dans la position d'engagement est supérieure à la distance de la surface (40) en contact avec le corps du boîtier (27) dans la position de montage.

14. Un porte-charge (1), en particulier un porte-bicyclette, comportant un cadre porteur (2) et un dispositif d'accouplement (3) relié à celui-ci pour la fixation à un véhicule, en particulier un véhicule automobile, sur lequel est disposé au moins un rail profilé (4) destiné à recevoir des charges, en particulier des bicyclettes, le porte-charge comportant un module d'extension (8) selon l'une des revendications 1 à 13, qui est fixé de manière amovible au rail profilé.

15. Un procédé de fixation d'un module d'extension (8) selon l'une des revendications 1 à 13 sur un porte-charge (1), en particulier sur un porte-bicyclette, comprenant les étapes suivantes :
fournir un module d'extension (8) selon l'une des revendications 1 à 13;
fixation de l'unité d'adaptation (23) à un rail profilé (4) formé sur le porte-charge (1);
relier l'unité de fixation (20) et le rail profilé d'extension (8) relié à ce dernier pour recevoir des charges, en particulier une bicyclette, à l'unité d'adaptation (23).
